# EUROPEAN PATENT APPLICATION

(11) **EP 2 332 709 A1**
(43) Date of publication of application: **15.06.2011**
(21) Application number: 10380146.0
(22) Date of filing: 03.12.2010
(51) Int. Cl.: B29B 17/02, H01J 9/52, B03B 9/06

(54) **Method and device for disassembling electrical-electronic apparatuses**

(30) Priority: 07.12.2009 ES 200931125
(71) Applicant: GH Electrotermia, S.A., 46184 San Antonio de Benageber (Valencia) (ES)
(72) Inventor: Moratalla Martinez, Pedro, 46184 San Antonio de Benageber (Valencia) (ES); Mezquida Gisbert, Miguel, 46184 San Antonio de Benageber (Valencia) (ES); Rosello Magan, José Rafael, 46184 San Antonio de Benageber (Valencia) (ES); Jordan Martinez, José, 46184 San Antonio de Benageber (Valencia) (ES); Cases Sanchis, César, 46184 San Antonio de Benageber (Valencia) (ES); Dede Garcia-Santamaria, Enrique, 46184 San Antonio de Benageber (Valencia) (ES)
(74) Representative: Ungria Lopez, Javier

(57) **Abstract**

The device comprises an induction coil (1, 1 a, 1b) located around a tubular support (2) wherein the device (3) to be disassembled is housed, and it includes an alternating current generator (4) that feeds the coil in order to melt the thermoplastic material joints of the device by induction heating a metallic element of said device, which allows performing the manual disassembly of the elements constituting the device. An application is the recycling of screen displays.

The invention is also related to a method that incorporates some steps according to that described for the device.

## Description

### OBJECT OF THE INVENTION

The present invention, such as this specification states in its title, relates to a method and device intended for allowing performing the disassembly and demounting of electrical and/or electronic apparatuses. The invention is applicable to any device wherein its constituent elements are at least assembled by thermoplastic material joints, with at least one of said elements being a metallic element, and which are intended for producing the heating of the metallic element from which the heating and melting of the thermoplastic material joints are produced, which allows performing the manual disassembly of the elements constituting the device.

In general, the invention is applicable to any electrical/electronic apparatus meeting the conditions discussed above, and more particularly applicable for performing the recycling of television or data display apparatuses based on liquid crystal displays (LCD), TFT (Thin-Film Transistor) displays, or plasma displays.

### BACKGROUND OF THE INVENTION

In the prior art, it is known that plasma or LCD displays are composed of a series of sheets or layers mounted between a front crystal and a rear metal plate. The different layers are joined by adhesive made of thermoplastic materials, so that for performing the recycling of its constituent elements, each one of the sheets making up the display has to be demounted, for this purpose a tool is introduced, such as can be for example a screwdriver, chisel or the like, between the crystal and the metallic plate, levering it in order to perform the separation between the different sheets. As the materials to be separated are fragile, when the tool is introduced and the sheets are levered, irregular and uncontrolled chipping and fragmentation of the different sheets are caused.

This task is long and costly with the consequent risk that entails for the operator, who may be get nailed by different chippings and splinters produced as a result of the mentioned operation. Moreover the separation of these sheets is polluting and unreliable, since splinters can not be separated and classified by the materials constituting the sheets.

Regarding LCD and TFT displays, these include a rear light source often consisting of a set of fluorescent tubes. Unlike the plasma displays mentioned above, the layers making up the display are very easily separated but the backlighting fluorescent tubes are very fragile and get broken when are handled in order to remove them from the device.

The breaking of the fluorescent tubes entails a risk for the operator, and the pollution caused by the dispersion of pollutant agents existing therein, such as phosphorus and mercury.

Therefore there is a need for obtaining a method and a device that allow performing the demounting of these type of apparatuses, so as to avoid risks for the operator, and further obtaining each and every one of the elements constituting thereof.

### DESCRIPTION OF THE INVENTION

With the aim of achieving the objectives and solving the aforementioned problems, the invention has developed a new method and device applied in all those electrical/electronic apparatuses wherein its constituent elements are at least assembled by thermoplastic material joints, and at least one of said elements is determined by an element of metallic nature.

Both the method and the device of the invention are based on induction heating performed by establishing induced or Foucault currents as a result of an alternating magnetic field applied to a conductive material.

Consequently, the novelty of the method of the invention consists of performing the magnetic induction heating of the metallic element that comprises at least the device, by applying a magnetic field to at least the elements to be disassembled, so that currents are induced in the metallic elements producing their heating, the remaining materials being transparent to the effect of the applied field and, therefore, maintaining their temperature and properties without suffering any apparent effect.

With the induction of metallic parts, mounting plates, cables, terminals, fixing clips, screws, etc., will be rapidly heated, and this heat is diffused by convection, radiation and conduction to the surrounding space and to the neighbouring elements.

Among these neighbouring elements, those in direct contact with the metallic pieces, mainly the thermoplastic material joints making up the assembly and isolation of the connections, are more quickly heated.

When these thermoplastic material joints are heated, they quickly melt and lose mechanical consistency whereby the device is in conditions of being manually disassembled.

This disassembly is of particular practical interest in dismantling electrical and electronic apparatuses for their decontaminating and recovering materials for recycling.

Consequently, the method of the invention comprises the following stages:
- magnetic induction heating the metallic element, which transmits this heat by convection, radiation and conduction to the surrounding space,
- heating the thermoplastic material joints by using the transmitted heat,
- melting the thermoplastic material joints, and
- performing the manual disassembly of the elements constituting the device.

Electro-electronic apparatuses to which the invention relates to are preferably plasma displays, liquid crystal displays or TFT (Thin-Film Transistor) displays, so that the method described considerably facilitates the recycling of the different layers making up said displays, by being the different sheets joined together by thermoplastic material.

The invention also relates to a device that allows applying the above-mentioned method, for which purpose said device is characterized in that it comprises at least one induction coil at least arranged around the metallic element, so that the induction coil is connected to an alternating current generator, so as when the generator is actuated the current induced in the metallic element causes its heating, transmitting heat by convection, radiation and conduction to the surrounding space, which causes the heating and melting of the thermoplastic material joints, allowing the disassembly of the elements that joined thereof.

In the preferred embodiment of the invention it is envisaged that the device be provided with a tubular support around which the induction coil is arranged, so that this is protected by said tubular support. Furthermore, this configuration allows inserting the apparatus to be demounted into the tubular support. Thus, in the case wherein the device of the invention is applied for performing the demounting of screen displays, the tubular support has a configuration complementary to that of the display, which enables the complete insertion of the display into the tubular support and when induction is applied, the melting of thermoplastic joints of the different layers constituting the display is produced.

In one embodiment of the invention it is envisaged that the tubular support has at least two induction coils of different lengths, located one next to the other, so that these are connected to the alternating current power generator for performing an individual feeding to one of the two coils, in which case a partial heating of the apparatus is applied, or else a feeding in series of the two coils is performed, which provides a total heating of the apparatus.

For this purpose, the alternating current generator has the proper configuration for allowing the different mentioned feedings to be carried out.

The tubular support is made of a non-metallic material resistant to heating temperature in order to allow its proper operation and providing suitable protection to the coil or coils. In addition, the coils are cooled by a water circuit.

Therefore, by using the method and apparatus of the invention the demounting for recycling the different apparatuses subjected to the process using the described device is greatly facilitated, which in the case of screen display avoids the need of breaking and levering for performing the separation between the different sheets constituting said screens, and the separation of the tubes is facilitated requiring much less effort, what drastically reduces the conventional breaking of said tubes.

Next, in order to facilitate a better understanding of this specification and being an integral part thereof, a series of figures wherein the object of the invention has represented with an illustrative and not limitative manner is attached.

### BRIEF DESCRIPTION OF THE FIGURES

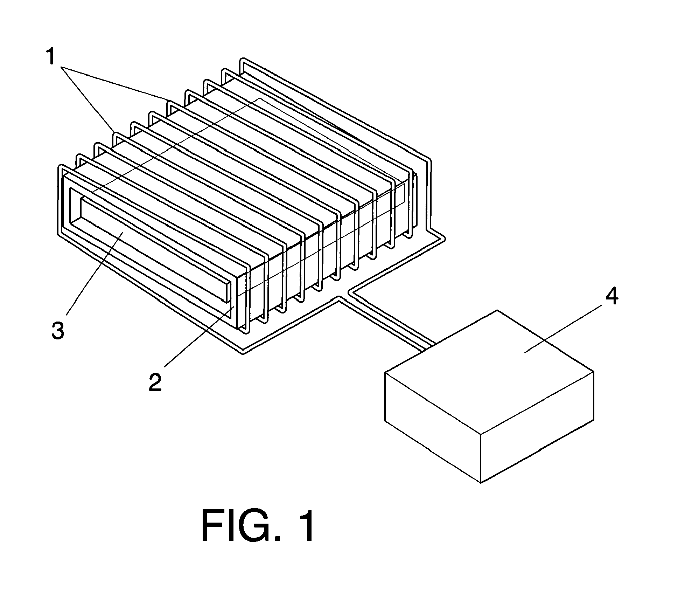

Figure 1. - Shows a schematic perspective view of a possible embodiment example of the device of the invention.
Figure 2. - Shows another possible embodiment example of the device of the invention wherein two coils that can be simultaneously or individually fed for performing the total or partial heating of the apparatus to be demounted, are used.

### DESCRIPTION OF THE PREFERRED EMBODIMENT

A description of the invention based on the figures previously mentioned is now made.

The apparatus of the invention consists of an induction coil 1, consisting of a set of turns wound around a tubular body 2 being the apparatus 3 to be demounted housed inside said tubular body. The induction coil 1 is connected to an alternating current generator 4.

In the preferred embodiment example, the apparatus 3 consists of a plasma display, so that the tubular support 2 has a rectangular-section configuration complementary to the rectangular section presented by plasma displays.

When actuating the alternating current generator 4, this configuration allows the circulating current through the coil 1 to induce a current in the metallic plate of the plasma display, which causes the heating of said display, being said heating extended to the surrounding space by convection, radiation and conduction. This has as a consequence that the joints of the different sheets making up the screen display, - said joints produced by using a thermoplastic material adhesive -, cause the heating of said thermoplastic material joints, and consequently their melting.

Once the thermoplastic material joints are molten, the operator can remove the apparatus 3 and manually separate the layers making up the plasma display.

The produced heating requires that the tubular support 2 be made of a non-metallic material, and of a material resistant to temperatures and stresses due to the loading and unloading of the pieces for protecting the coil, which is constructed from a copper conductor cooled by a water circuit in order to dissipate the self heating of the losses by Joule effect.

The alternating current source is medium frequency and comprises a conventional induction generator to transistors, of those used for induction heating.

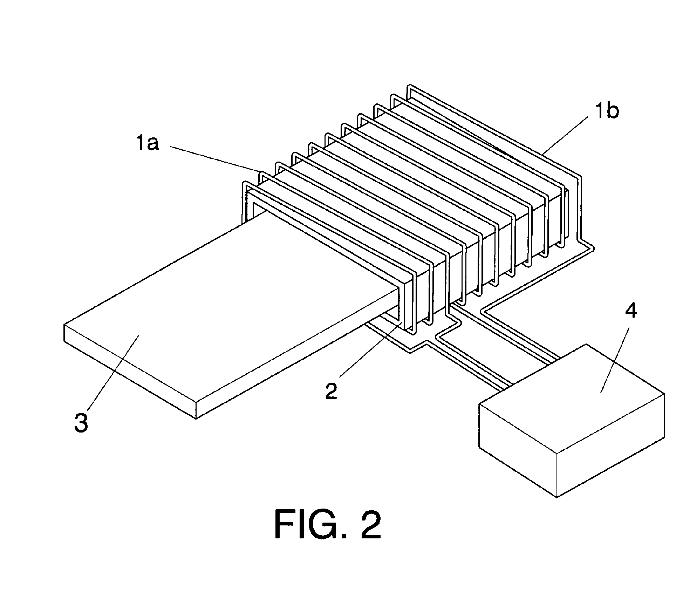

In the embodiment of Figure 2 two induction coils 1a and 2b, located one next to the other on the tubular support 2 are used, so that both coils 1 a and 1 b are connected to the alternating current generator 4, which is configured for independently feeding one of the coils 1 a and 1b, or for feeding both in series, so that different heating areas are obtained in order to allow performing the partial heating of the apparatus 3 to be heated, according to the length of the coil 1 a, or according to the length of the coil 1 b, or according to the sum of the two lengths. Obviously a single coil 1 a or 1 b for obtaining a device that only allows performing a partial heating could be included, in the case where it is required.

## Claims

1. METHOD FOR DISASSEMBLING ELECTRICAL/ELECTRONIC APPARATUSES, applied to apparatuses (3) wherein the elements constituting said apparatus are at least assembled by thermoplastic material joints, with at least one of these elements being a metallic element, **characterized in that** it comprises:
- magnetic induction heating of the metallic element,
- transmitting the heat by convection, radiation and conduction by the metallic element to the surrounding space,
- heating the thermoplastic material joints by using the transmitted heat,
- melting the thermoplastic material joints, and
- performing the manual disassembly of the elements.

2. METHOD FOR DISASSEMBLING ELECTRICAL/ELECTRONIC APPARATUSES, according to claim 1, **characterized in that** it is applied for recycling electrical/electronic apparatuses (3).

3. METHOD FOR DISASSEMBLING ELECTRICAL/ELECTRONIC APPARATUSES, according to claims 1 and 2, **characterized in that** the apparatuses (3) are displays selected among plasma displays, liquid crystal displays (LCD) and TFT (Thin-Film Transistor) displays.

4. DEVICE FOR DISASSEMBLING ELECTRICAL/ELECTRONIC APPARATUSES, applied in apparatuses (3) wherein the elements constituting said apparatus are assembled by thermoplastic material joints, with at least one of said elements being a metallic element, **characterized in that** it comprises:
- at least one induction coil (1, 1 a, 1 b) at least arranged around the metallic element,
- an alternating current generator (4) connected to the induction coil (1, 1 a, 1 b) for melting the thermoplastic material joints by induction heating of the metallic element, and allowing the disassembly of the elements that were joined by said joints.

5. DEVICE FOR DISASSEMBLING ELECTRICAL/ELECTRONIC APPARATUSES, according to claim 4, **characterized in that** it comprises a tubular body (2) around which the induction coil (1, 1 a, 1b) is mounted for protecting said coil, being the apparatus (3) to be demounted arranged inside said tubular body.

6. DEVICE FOR DISASSEMBLING ELECTRICAL/ELECTRONIC APPARATUSES, according to claim 5, **characterized in that** the tubular support (2) comprises at least two induction coils (1, 1a, 1b) of different lengths, one next to the other, which are connected to the alternating current generator (4), which is configured for performing a feeding selected between an individual feeding to one of the coils (1a, 1b) and a feeding in series to the two coils (1a, 1 b), in order to perform a heating selected between a partial heating and total heating of the apparatus (3).

7. DEVICE FOR DISASSEMBLING ELECTRICAL/ELECTRONIC APPARATUSES, according to claims 4, 5 and 6, **characterized in that** the coils (1, 1 a, 1 b) are cooled by a water circuit.

8. DEVICE FOR DISASSEMBLING ELECTRICAL/ELECTRONIC APPARATUSES, according to claims 4 and 5, **characterized in that** the tubular support (2) is made of a non-metallic material resistant to the heating temperature, and having a configuration complementary to that of the apparatus (3).

9. DEVICE FOR DISASSEMBLING ELECTRICAL/ELECTRONIC APPARATUSES, according to claims 4 to 8, **characterized in that** it is applied in screen displays selected among plasma displays, liquid crystal displays (LCD) and TFT (Thin-Film Transistor) displays.
